Europäisches Patentamt

**European Patent Office**

**Office européen des brevets**

(11) Publication number: **0 032 632**
A2

(19)

(12)

# EUROPEAN PATENT APPLICATION

(21) Application number: **80304762.0**

(22) Date of filing: **30.12.80**

(51) Int. Cl.³: **A 01 K 89/01**

(30) Priority: **17.01.80 US 112912**

(71) Applicant: **BRUNSWICK CORPORATION, One Brunswick Plaza, Skokie, IL 60077 (US)**

(43) Date of publication of application: **29.07.81 Bulletin 81/30**

(72) Inventor: **Miller, Vernon R., 6619 South 75th East Avenue, Tulsa Oklahoma 74133 (US)**

(74) Representative: **Allden, Thomas Stanley et al, A.A. THORNTON & CO. Northumberland House 303-306 High Holborn, London WC1V 7LE (GB)**

(84) Designated Contracting States: **DE FR GB IT SE**

(54) **Trip lever guide system.**

(57) This invention comprehends a spin casting style fishing reel that is suspended below a fishing rod. The reel has a finger lever arm that causes the spinner head to move from the winding position to the precasting and casting position by lifting up on the finger lever. A unique guide means located inside the reel housing prevents the reel from miscasting by maintaining the finger lever in the right position.

## BACKGROUND OF THE INVENTION

1. Field of the Invention

This invention relates to a spin casting style fishing reel, and more particularly, relates to spin casting style fishing reels that are suspended below a fishing rod having a finger lever for placing the reel in the casting position.

2. Background of the Prior Art

The first commercial spin casting fishing reel was the ZEBCO 44 model reel that was made in accordance with the teachings of Hull's U. S. Patent No. 2,929,579. This fishing reel was not too well received by the fishing community. However, about 15 years after the commercial introduction of the ZEBCO 44 reel, a second under the rod spin casting reel based on the famous ZEBCO 202 reel was commercially introduced; the ZEBCO 444. This reel had the same type of finger mounting mechanism as the older model 44. It is believed that one of the problems that plagued fishermen with these two reels (and possibly why these reels were never great commercial successes), was that the end of the finger lever could be bent or the toggle arrangement easily worn whereby the end of the lever inside the reel would not contact the casting mechanism. When this occurred, the fishing line could not be cast properly from the reel. The blue sky design of Hull in U. S. Patent No. 4,156,-510 suffers from the same defect.

Thus, this present invention overcomes the design problems found in these prior art reels.

## SUMMARY OF THE INVENTION

This invention relates to spin casting style fishing reels and comprehends a reel that is suspended below the fishing rod and is mounted thereon. This type of reel requires a finger lever to move the reel mechanism to a casting position. The stability of the finger lever and its movement is of prime importance in order for the reel to cast consistently time after time.

It is therefore an object of this invention to provide a fishing reel with a new improved means for providing an actuator for a casting mechanism of a spin casting reel suspended below a fishing rod.

It is another object of this invention to provide a fishing reel with a single lever arm mechanism that insures proper casting of the fishing line.

Yet another object of this invention is to provide such a spinning style fishing reel whereby the reel housing contains guide means for the finger lever. Still yet another object of this invention is to provide such a lever arm guide means that is integral with the housing.

The above and other and further objects and features will be more readily understood by reference to the following detailed description and accompanying drawings.

DESCRIPTION OF THE DRAWINGS

Figure 1 is an exploded perspective view of the spin casting style fishing reel containing the invention described herein;

Figure 2 is a cross sectional side elevation view of the spin casting fishing reel in the retrieve move;

Figure 3 is an open end view of the back of the spin casting style fishing reel with the invention hereof shown therein; and,

Figure 4 is a cross sectional side elevation view of the spin casting reel in the casting mode.

DESCRIPTION OF THE PREFERRED EMBODIMENTS

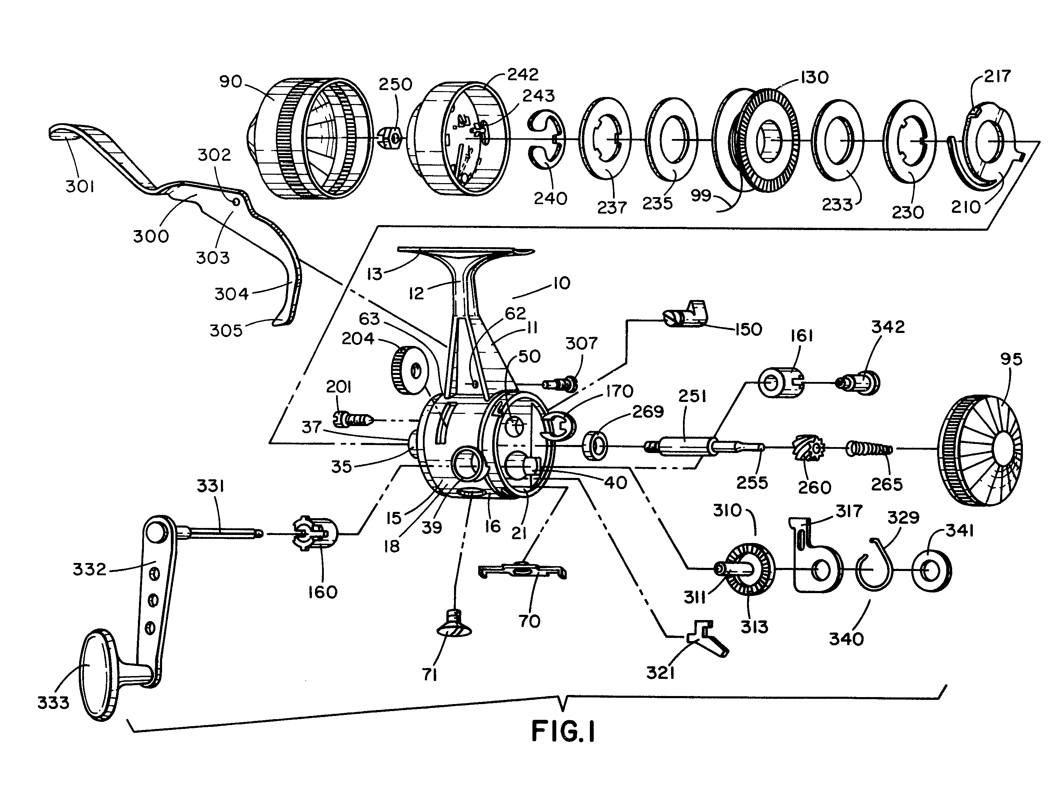

In a fishing reel 10 of the spin casting type containing the preferred embodiments of the invention, Figure 1 generally depicts an exploded perspective view of such a reel. A housing 11, preferably made of a plastic material such as Acrylonitrile Butadyene Styrene (ABS) or glass filled polycarbonate, has a center deck plate 14 with forward and rear body portions 15 and 16. A central hub 35 projects forward of the deck plate 14 with a drag plate 210, back spool washer 230, back flat drag washer 233, spool assembly 130, front flat drag washer 235, front spool washer 237, all secured to the hub 35 by means of spool retainer clip 240 which fits into a groove (not shown in Figure 1). A center shaft 251 is mounted in a hole (not shown in Figure 1) in a hub 35 with the spinner head 242 mounted on the forward threaded end of the shaft 251 by means of nut 250. The spinner head 242 partially surrounds the forward flange of the spool 130 with fishing line 99 being wound thereon. A front cover 90 secured on the first forward body portion 15 has a front hole (not shown in Figure 1) which acts as a fishing line guide as the line is cast from the reel and rewound after casting.

A clutch head screw 201 is mounted in the interior 21 of the second body portion 16 with clutch wheel 204 mounted on screw 201. Tab 217 fits into the head of screw 201 and when the clutch wheel 204 is revolved upward toward stem 12 the screw 201 advances forward toward the spool retainer clip 240 increasing the clamping force on the spool 130 so that spool 130's ability to revolve relative to the hub 35 is decreased. When the wheel 204 is revolved away from the stem 12, the clamping force is decreased and the spool 130 is permitted to revolve relative to hub 35 thus creating the drag mechanism for the fishing reel 10. The center shaft 251 is slidably and rotatably mounted in bearing 269 which is mounted in the deck plate 14. Slidably mounted on center shaft 251 in the second body portion is pinion gear 260 and maintained in place by the center shaft spring 265.

A finger brake lever 300 is mounted on the housing 11 exterior the first body portion 15 and inside the second body portion 16 and being in operable contact with the distal end 255 of the shaft 251. When the exterior portion of the lever 300 is pulled upward toward the mounting foot 13, the center shaft 251 and the spinner head mounted thereon are pushed forward relative to the bearing 269 and the hub 35. The pickup pin mechanism 243 mounted on spinner head 242 cooperates with the cam mounted on the face of hub 35 to maintain the spinner head 242 in a forward position. In this forward position the fishing line 99 can be cast from the reel 10.

Crank assembly 310 is coupled with the anti-reverse assembly 330 which comprises a ratchet (on the back side of face gear 313 and not shown in Figure 1), an anti-reverse drag arm 317, a drag spring 329 and spacer washer 341 all mounted on the hollow crank shaft 311. An anti-reverse pawl 321 is mounted in the deck plate 14 and received in between the back of the face gear 313 and drag arm 317 for engageable and disengageable contact with the ratchet. The crank assembly 310 is mounted in bearing supports 39 and 40 by sliding between slots in the supports 39 and 40. Crank bearings 160 and 161 mounted in supports 39 and 40 provide suitable bearings for the hollow shaft 311. A crank rod 331 is slip fitted into the hole in shaft 311 and keyed thereto. Crank rod nut 342 is secured to the threaded end to fasten rod 331 to the reel 10. The rod 331 is connected to the crank handle 332 and crank knob 333. The gear 313 is in engageable contact with pinion 260 so that when the crank handle 332 and knob 333 are rotated in a forward direction (toward the front cover) the crank shaft 251 rotates causing the spinner head 242 to rotate as well. This rotative motion disengages the pickup pin mechanism 243 from the hub 35 cam causing the spinner head 242 and shaft 251 to move rearward. This same motion causes the pickup pin of the mechanism 243 to extend outwardly beyond the spinner head 242 so that the fishing line 99 can be wound on the spool 130.

Anti-reverse actuator 150 is mounted in upper housing hole 50 and retained therein by retainer clip 170. The actuator 150 is in cooperative contact with the anti-reverse drag arm 317. In one position the actuator 150 disengages the anti-reverse assembly 330 permitting the crank rod 331 and the crank assembly to rotate in either the forward direction (upward toward the stem 12) or the reverse direction (downward from the stem 12 toward the back of the reel).

A back cover 95 is secured on the second back portion 16 to enclose the reel 10. Cover lock 70 is mounted within the housing 11 and is tightened in place by screw 71 clamping the covers 90 and 95 to the housing.

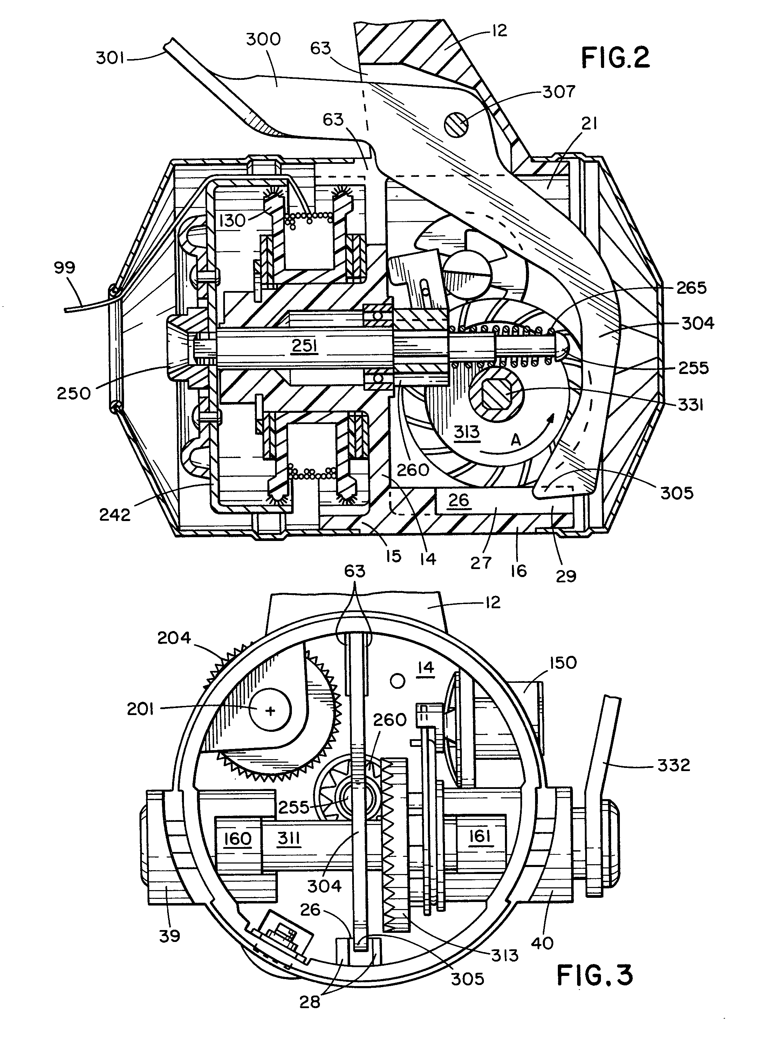

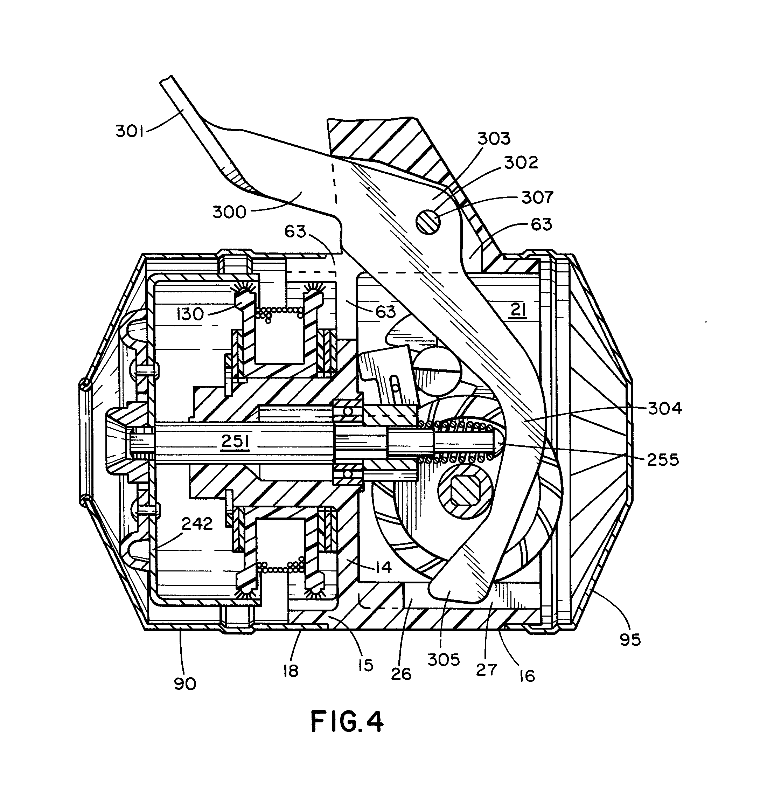

In the preferred embodiment of this invention as best seen in Figures 2, 3 and 4, a brake lever arm 300 is mounted on stem 12 by means of screw 307 passing through toggle hole 302 and mounting means 303 in lever arm 300 and secured in hole 62 in the stem thereby permitting arm 300 to pivot. The arm 300 has a finger grip 301 mounted exterior of the exterior surface 18 of the front reel portion 15, which may be cylindrical, if desired. A bell crank portion 304 and its toe end 305 is mounted in the interior 21 of the back or second body portion 16. A part of the first and second body portions 15 and 16, the deck plate 14 and the stem 12 are removed forming cutout 63. The cutout 63 permits the lever arm 300 to be mounted within the housing 11 and to pivot therein.

In the normal position for winding the fishing line 99 on spool 130, the spinner head 242, the center shaft 251 and the lever arm 300 are in the back position and normally rotated by means of the face gear 313 and pinion 260 in the direction shown by arrow A. In the normal position for casting of the fishing line 99 or when the fishing line 99 is actually being cast, the spinner head 242, the shaft 251, and the distal end 255 are forced forward by the bell crank 304 because the finger grip 301 is pulled upward toward the mounting foot 13.

In fishing reels of similar design, i.e., spin casting reels with a finger casting lever provided so that the reel may be suspended below a fishing rod like a spinning style fishing reel, the finger lever has always been the weak link in the reel operation. Hull's U. S. Patent No. 2,929,574 describes the first of this style of reel which was commercially sold as the ZEBCO 44. The double offset construction of the bell crank lever constantly caused fishermen problems because the toe end of the crank lever was constantly becoming disengaged with the casting mechanism. In a later commercial version, the ZEBCO 444, the same problem occurred.

The embodiment of the invention described herein overcomes the problems of these prior art reels (the ZEBCO 44 originally was commercially introduced over twenty years ago) by providing a toe 305 of the lever arm 300 that extends diametrically the full width of the body portion 16 of the housing 11. Opposite the cutout 63 are guide means 26 which may be a part of the second body portion 16 and fashioned to receive toe 305. The guide means 26 may be in the form of a trough 27, a cutout 29 or a pair of side rails 28. The guide means 26 prevents the lever arm 300 by confining the toe 305 from being pulled to one side or the other causing the bell crank 304 from missing contact with the distal end 255 when the finger grip 301 is pulled upward. The guide means 26 can be integrally formed with the second body portion 16 or may be fastened therein by any suitable means such as an adhesive.

Because the guide means 26 insures that the toe 305 and the bell crank 304 will pivot correctly and make proper contact with the distal end 255, the lever arm 300 can be made from a sheet metal such as aluminum or steel and the finger grip section 301 can be twisted 90° to the other portions to provide a larger finger lever surface. It has been found by testing models of the fishing reel incorporating my invention that after thousands upon thousands of casts, the toe 305 remained in the guide means 26 and the bell crank 304 always pushed the distal end 255 forward correctly.

It should be understood, of course, that the specific forms of the invention illustrated and described herein are intended to be representative only, as certain changes and modifications may be made without departing from the teachings herein disclosed. Accordingly, reference should be made to the appended claims in ascertaining the full scope of the invention.

CLAIMS:

1. A closed face spinning reel of the type having a front spinner head comprising:

(a) a housing having a support stem, mounting foot, deck plate and body portions with exterior and interior surfaces, the first portion projecting forward of the plate and the second portion projecting rearward of the plate, a center passageway in the deck plate and defining a central axis;

(b) a center shaft mounted in the central passageway and having:

(1) a front proximal end in the 1st portion projecting forward with means for mounting and securing the spinner head thereto;

(2) a center section and a distal end mounted in the second portion and projecting rearward;

(c) spring means mounted at the distal end tending to force the center shaft in a rearward direction;

(d) a brake lever comprising:

(1) a finger grip at one end,

(2) mounting means near the center,

(3) a bell crank portion and toe end at the other end,

the brake lever mounted on the housing with the finger grip exterior of the exterior surface of the first portion, the mounting means toggle mounted in the housing and the bell crank portion and the toe extending into the second portion, the bell crank in engageable contact with the distal end of the crank shaft;

(e) guide means mounted in the interior of the second portion stabilizing the back and forth travel of the toe that is parallel to the axis and maintaining alignment of the bell crank with the distal end of the crank shaft.

2. The reel of claim 1 wherein the stem and first and second portions have a cutout for mounting the lever within the housing.

3. The reel of claim 2 wherein the stem has a toggle hole near the cutout.

4. The reel of claim 3 wherein the mounting means comprises a lever hole in the lever that is axially positionable with the toggle hole.

5. The reel of claim 4 further including a toggle screw positioned in the lever hole and toggle hole providing a pivot for the lever.

6. The reel of claim 5 further including a pinion slideably mounted on the center section of the shaft and in the second portion adjacent the deck plate.

7. The reel of claim 6 wherein the spring means is located between the pinion and the distal end of the center shaft.

8. The reel of claim 7 further including hub means mounted on the deck plate and extending forward partially within the first portion.

9. The reel of claim 8 further including positioning means associated with the hub means for maintaining the spinner head in a forward position when the bell crank is moved to a forward position by lifting the finger grip.

10. The reel of claims 1 or 9 wherein the guide means is mounted on the second portion diametrically opposed to the cutout.

11. The reel of claim 10 wherein the guide means is confined to the second portion.

12. The reel of claim 11 wherein the guide means is a longitudinal slot parallel to the central axis.

13. The reel of claim 11 wherein the guide means comprises 2 parallel rails.

14. The reel of claim 11 wherein the guide means is a trough.

15. In a closed face fishing reel having:

a housing having a stem, deck plate and body portions with exterior and interior surfaces, the first portion projecting forward of the plate and the second portion projecting rearward of the plate, a cutout in the first and second portions and plate adjacent the stem, and improvement comprising a brake lever having:

   (a) a finger grip at one end,

   (b) mounting means near the middle,

   (c) a toe at the other end, and,

   (d) a bell crank portion between the toe and mounting means;

the lever position in the cutout with the finger grip exterior the exterior surface of the first portion, the bell crank and the toe position substantially within the second portion and the mounting means pivotally mounted on the stem;

   (e) guide means mounted on the interior of the second portion opposite the cutout for receiving the toe and stabilizing the back and forth travel of the toe and bell crank.

16. In the reel of claim 15, the guide means is a longitudinal slot parallel to the stem.

17. In the reel of claim 16 wherein the guide means comprises 2 parallel rails.

18. In the reel of claim 15 wherein the guide means is a trough.

FIG.1

1/3

0032632

FIG.2

FIG.3

FIG.4